# EUROPÄISCHE PATENTSCHRIFT

(11) **EP 0 364 496 B1**
(45) Veröffentlichungstag und Bekanntmachung des Hinweises auf die Patenterteilung: **04.08.1993**
(21) Anmeldenummer: 88907122.1
(22) Anmeldetag: 19.08.1988
(51) Int. Cl.: G05D 3/12

(54) **VERFAHREN ZUM POSITIONIEREN EINES TEILES UND VORRICHTUNG ZUR DURCHFÜHRUNG DES VERFAHRENS**
PROCESS AND DEVICE FOR POSITIONING A PART
PROCEDE ET DISPOSITIF DE POSITIONNEMENT DE PIECES

(30) Priorität: 02.09.1987 DE 3729312
(43) Veröffentlichungstag der Anmeldung: 25.04.1990
(73) Patentinhaber: ROBERT BOSCH GMBH, 70442 Stuttgart (DE)
(72) Erfinder: FROMMHOLZ, Wilfried, D-7583 Ottersweier (DE); HOPPE, Willi, D-7590 Achern-Oberachern (DE); VÖHRINGER, Klaus, D-7502 Malsch (DE)
(86) Internationale Anmeldenummer: DE8800509
(87) Internationale Veröffentlichungsnummer: WO8902112

(56) Entgegenhaltungen:
- GB-A- 1 094 512
- US-A- 4 250 441
- US-A- 4 504 917

## Beschreibung

### Stand der Technik

Die Erfindung geht aus von einer Vorrichtung zum Positionieren eines Teils nach der Gattung des Hauptanspruchs.

Es ist allgemein bekannter Stand der Technik, bei einer Positioniervorrichtung mechanische Endanschläge mit Endschaltern zu detektieren. Bei Erreichen eines Anschlags betätigt das zu positionierende Teil einen Endschalter, mit dem der Positionierantrieb stillgesetzt wird. Die Endschalter müssen präzise justiert werden, da ein fehlerhafter Endanschlag einerseits eine Beschädigung des zu positionierenden Teils und andererseits eine Überlastung des Positionierantriebs zur Folge haben kann.

Aus der US-PS 4 250 441 ist eine Positioniervorrichtung bekannt, die eine elektronische Abschaltung des Antriebs vorsieht, wenn eine erste oder eine zweite vorgegebene Position erreicht ist. Das zu positionierende Teil ist mit einem Potentiometer mechanisch gekoppelt, das die Position in ein elektrisches Signal umsetzt. Das am Potentiometer abgreifbare elektrische Signal ist zwei Komparatoren zugeführt, die das Signal mit jeweils einem vorgegebenen Schwellwert vergleichen, der einer vorgegebenen Position entspricht. Die Komparatoren geben jeweils Ausgangssignale an eine Treiberschaltung ab, die zum Abschalten des Antriebs bei Erreichen einer der vorgegebenen Positionen führen.

Aus der US-PS 4 504 917 ist eine in einer Werkzeugmaschine enthaltene Positioniervorrichtung für ein Werkzeug bekannt, das eine zwischen Zwei vorgegebenen Positionen hin- und hergehende Bewegung ausführt. Das Werkzeug ist mit einem Potentiometer mechanisch gekoppelt, an welchem eine der Position entsprechende Spannung abgreifbar ist. Die Potentiometerspannung wird in Komparatoren mit zwei den vorgegebenen Positionen entsprechenden Schwellwerten verglichen. Bei Erreichen einer der vorgegebenen Positionen wird die Bewegungsrichtung des Antriebs umgekehrt.

### Vorteile der Erfindung

Die erfindungsgemäße Vorrichtung weist den Vorteil auf, daß ein vorgegebener Anschlag des zu positionierenden Teils mit Sicherheit erreicht wird. Die erfindungsgemäß vorgesehene Zeitverzögerung bei dem elektronischen Detektieren wenigstens einer vorgegebenen Position, die vorzugsweise dem Anschlag zugeordnet ist, veranlaßt das zu positionierende Teil, mit einer Anpreßkraft gegen den Anschlag zu drücken. Eine Zerstörung des Anschlags sowie eine Überlastung des Antriebs wird durch das Abschalten des Antriebs nach der vorgegebenen Zeit verhindert. Nach dem Abschalten des Antriebs sperrt das einer Steuerschaltung zugeführte Signal eine Treiberschaltung derart, daß die Drehrichtung des Antriebs für die Positionsverstellung in Richtung des erreichten Anschlags gesperrt ist, während die entgegengesetzte Drehrichtung freigegeben ist.

Vorteilhafte Weiterbildungen und Verbesserungen der erfindungsgemäßen Vorrichtung ergeben sich aus Unteransprüchen.

Eine besonders einfache Realisierung der Zeitverzögerung ist mittels einer Tiefpaßschaltung möglich, die eine Widerstands-Kondensator-Kombination enthält.

In einer vorteilhaften Ausgestaltung ist vorgesehen, daß das zu positionierende Teil mit einem als Potentiometer ausgebildeten Positions-Istwert-Geber mechanisch gekoppelt ist.

Weitere vorteilhafte Weiterbildungen ergeben sich aus weiteren Unteransprüchen in Verbindung mit der folgenden Beschreibung.

### Zeichnung

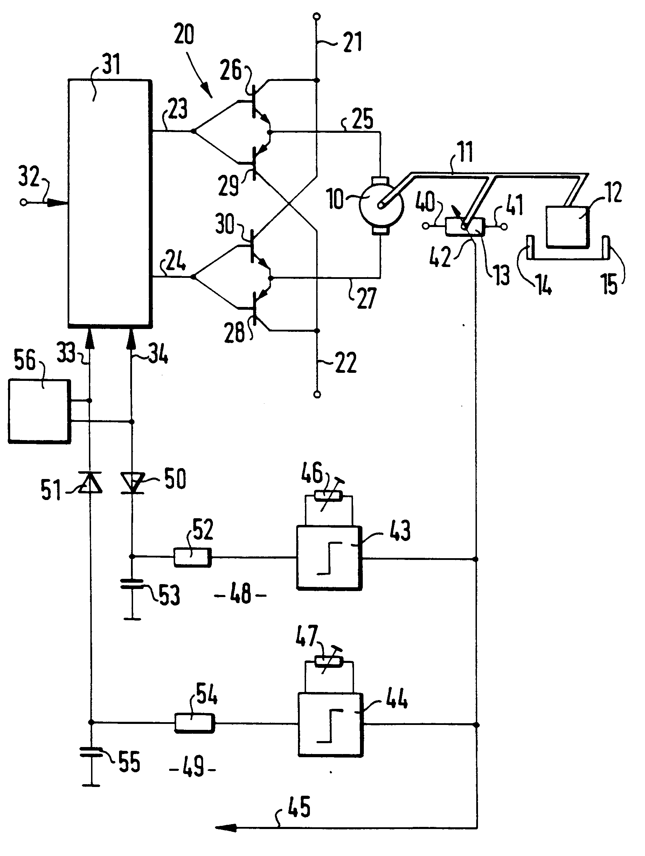

Die Figur zeigt ein Schaltbild einer erfindungsgemäßen Positionsvorrichtung.

Mit 10 ist ein Elektromotor bezeichnet, der über eine Kopplung 11 mit einem zu positionierenden Teil 12 sowie mit einem Positions-Istwertgeber 13 verbunden ist.

Das zu positionierende positionierende Teil 12 ist zwischen einem ersten und zweiten mechanischen Anschlag 14, 15 positionierbar. Der Elektromotor 10 ist über eine Motortreiberschaltung 20 mit dem ersten und zweiten Anschluß 21, 22 einer nicht gezeigten Spannungsquelle verbindbar. In Abhängigkeit von den Signalen auf den Treibereingangsleitungen 23, 24 ist entweder der erste Motoranschluß 25 über einen ersten Schalter 26 mit dem ersten Spannungsquellenanschluß 21 und ein zweiter Motoranschluß 27 über einen zweiten Schalter 28 mit dem zweiten Spannungsquellenanschluß 22 verbindbar oder der erste Motoranschluß 25 über einen dritten Schalter 29 mit dem zweiten Spannungsquellenabschluß 22 und der zweite Motoranschluß 27 über einen vierten Schalter 30 mit dem ersten Spannungsquellenanschluß 21 verbindbar. Die vier Schalter 26, 28, 29, 30 sind beispielsweise als Schalttransistoren realisiert. In der beschriebenen Ausführung sind zueinander komplementäre Transistoren verwendet, wobei der Treiber 20 über nur zwei Treibereingangsleitungen 23, 24 ansteuerbar ist. In einer anderen, nicht dargestellten Ausführungsform ist der Treiber 20 mit vier Transistoren 26, 28, 29, 30 vom selben Leitfähigkeitstyp realisierbar, wobei vier Treibereingangsleitungen erforderlich sind.

Die Signale an den Treibereingangsleitungen 23, 24 erzeugt eine Steuerschaltung 31, die wenigstens eine Eingangsleitung 32 sowie einen ersten und zweiten Steuereingang 33, 34 aufweist. Die Steuerschaltung 31 erzeugt in Abhängigkeit von dem über die Eingangsleitung 32 zugeführten Signal die Ansteuerimpulse für den Treiber 20. Das Eingangssignal ist beispielsweise ein aus der Differenz von Positions-Sollwert und Positions-Istwert gebildetes Regelabweichsignal.

Der Positions-Istwertgeber 13 ist beispielsweise als Potentiometer realisiert, dessen feste Anschlüsse 40, 41 an eine Spannungsquelle mit stabilisierter Spannung angeschlossen sind. Am beweglichen Mittenabgriff 42 des Positionsgebers 13 steht eine Spannung zur Verfügung, die ein Maß für den Positions-Istwert darstellt. Dieses Signal wird einem ersten und zweiten Vergleicher 43, 44 sowie über die Leitung 45 nicht gezeigten Schaltungsteilen zugeführt. Die Vergleicher 43, 44 weisen jeweils eine Schwelle auf, die mit den Einstellern 46, 47 vorgebbar ist. Bei einer Schwellenüberschreitung geben die Vergleicher 43, 44 ein Signal an die erste oder zweite Steuerleitung 33, 34 ab. Zwischen den Vergleichern 43, 44 und den Steuerleitungen 33, 34 ist jeweils ein Signalverzögerer 48, 49 angeordnet. Die Signalverzögerer 48, 49 sind über Dioden 50, 51 mit den Steuerleitungen 33, 34 verbunden. Die Signalverzögerer 48, 49 sind beispielsweise als RC-Tiefpässe mit den Widerständen 52, 54 und den Kondensatoren 53, 55 realisiert.

Die Steuerleitungen 33, 34 sind mit einer optischen und/oder akustischen Anzeige 56 verbunden, die ein Signal auf den Steuerleitungen 33, 34 anzeigt.

Das erfindungsgemäße Verfahren wird anhand der beschriebenen Schaltungsanordnung näher erläutert:
Das vom Positionsgeber 13 abgegebene Positions-Istwertsignal wird in den Vergleichern 43, 44 mit vorgegebenen Schwellen verglichen. Vorzugsweise werden die Schwellen entsprechend den mechanischen Anschlägen 14, 15 für das zu positionierende Teil 12 gewählt. Wird beispielsweise der erste Anschlag 14 erreicht, dann gibt der erste Vergleicher 43 über die Zeitverzögerung 48 und über die Diode 50 ein Abschaltsignal auf die Eingangsleitung 34 der Steuerschaltung 31. Daraufhin wird die Drehrichtung des Elektromotors 10 zur Positionsverstellung des Teils 12 in Richtung auf den ersten Anschlag 14 gesperrt, während ein Einschalten des Elektromotors in der entgegengesetzten Drehrichtung aber weiterhin möglich ist. Die Zeitverzögerung 48 sorgt dafür, daß der Elektromotor 10 nicht sofort nach dem Erreichen des ersten Anschlags 14 abgeschaltet wird, sondern noch eine vorgebbare kurze Zeit nachläuft. In speziellen Anwendungen ergibt sich dadurch der Vorteil, daß das zu positionierende Teil 12 mit einer bestimmten Kraft gegen den mechanischen Anschlag 14 gedrückt wird. In speziellen Anwendungsfällen, bei denen diese Anpreßkraft nicht erforderlich ist, kann die Zeitverzögerung 48 entfallen. Mit der Diode 50 ist eine Entkopplung zwischen dem auf der Steuerleitung 34 liegenden und dem an der Verzögerung 48 auftretenden Signal sichergestellt, wenn das Abschaltsignal nicht gegeben wird. Die Schaltschwelle des zweiten Komparators 44 ist in der Weise eingestellt, daß ein Abschaltsignal dann abgegeben wird, wenn das zu positionierende Teil 12 den zweiten mechanischen Anschlag 15 erreicht. Auch hier sorgt die Zeitverzögerung 49 für eine Anpreßkraft des Teils 12 an den zweiten Anschlag 15.

In bestimmten Anwendungsfällen ist es wünschenswert, das Erreichen einer oder beider vorgegebenen Positions-Istwerte optisch und/oder akustisch anzuzeigen. Hierfür ist die Anzeige 56 vorgesehen, die an die Steuerleitungen 33, 34 angeschlossen ist. Das Erreichen einer Schwelle oder einer von zwei Schwellen kann beispielsweise einen Fehler des Positions-Istwertgebers 13 oder der Kopplung 11 signalisieren.

In einer weiteren Ausführungsform der erfindungsgemäßen Vorrichtung ist lediglich ein Vergleicher 43 oder 44 mit einer vorgebbaren Schwelle vorgesehen. Diese einfachere Ausführung ist geeignet zur Überwachung eines vorgegebenen Positionsgrenzwertes für das zu positionierende Teil 12.

In einer weiteren Ausführungsform ist anstelle der beiden Vergleicher 43, 44 ein Vergleicher mit zwei unterschiedlichen vorgebbaren Schwellen vorgesehen. Im Gegensatz zu der Ausführungsform mit den zwei Vergleichern 43, 44 erzeugt der eine Vergleicher bei Überschreiten einer der beiden Schwellen an lediglich einem Ausgang ein Abschaltsignal, das der Steuerschaltung 31 über eine Steuerleitung 33 oder 34 zugeführt wird. Bei den beiden Ausführungen der erfindungsgemäßen Vorrichtung mit einem Vergleicher wird der Elektromotor bei Erreichen einer der vorgegebenen Schwellen abgeschaltet und ist ohne Eingriff in die Schaltung nicht wieder einschaltbar. Diese einfacheren Ausführungen eignen sich daher, insbesondere in Verbindung mit der Anzeige 56, zur Funktionsübervachung der erfindungsgemäßen Positionsvorrichtung auf Fehler.

Die Vergleicher 43, 44 sowie die Zeitverzögerungen 48, 49 sind sowohl in Analog- als auch in Digitaltechnik realisierbar. Im letzteren Fall wird das vom Positions-Istwertgeber 13 abgegebene Signal einem Analog-Digital-Wandler zugeführt, dessen Ausgangssignal in einer digitalen Rechenschaltung in der beschriebenen Weise mit vorgegebenen Werten verglichen und in Abhängigkeit von den Vergleichsoperationen zeitverzögert an die Steuerleitungen 33, 34 abgegeben wird.

## Patentansprüche

1. Vorrichtung zum Positionieren eines Teils (12) mittels wenigstens eines Positions-Istwert-Gebers (42) eines elektromotorischen Antriebs,
- dessen Motor (10) in Abhängigkeit von Treiberansteuersignalen in der einen oder in der anderen Drehrichtung einschaltbar ist,
- wobei die Treiberansteuersignale von einer Steuerschaltung (31) in Abhängigkeit von einem Positions-Sollwert erzeugt werden
- und die Steuerschaltung (31) wenigstens einen Steuereingang (33, 34) zum Sperren des Treibers beziehungsweise zum Abschalten des Motors (10) aufweist,
dadurch gekennzeichnet,
- daß dem Steuereingang (33, 34) zeitverzögert ein Signal zugeführt ist, wenn der Positions-Istwert einem mechanischen Anschlag (14, 15) des zu positionierenden Teils (12) entspricht
- und daß das der Steuerschaltung (31) zugeführte Signal den Treiber (20) derart sperrt, daß die Drehrichtung des Motors (10) für die Positionsverstellung in Richtung des erreichten Anschlags (14, 15) gesperrt ist während die entgegengesetzte Drehrichtung nicht gesperrt ist.

2. Vorrichtung nach Anspruch 1, mit wenigstens einem Vergleicher (43, 44), der den vom Positions-Istwert-Geber (13) abgegebenen Positions-Istwert mit wenigstens einer vorgebbaren Schwelle (46, 47) vergleicht und der bei Überschreitung wenigstens einer Schwelle (46, 47) ein Abschaltsignal über eine Zeitverzögerung (48, 49) an wenigstens einen Steuereingang (43, 44) der Steuerschaltung (31) abgibt, mit dem die eine oder andere Drehrichtung des Motors (10) gesperrt wird.

3. Vorrichtung nach Anspruch 1 oder 2, mit einem als Potentiometer ausgebildeten Positions-Istwert-Geber (13).

4. Vorrichtung nach Anspruch 2, mit einem RC-Tiefpaß (52, 53, 54, 55) zur Zeitverzögerung (48, 49).

5. Vorrichtung nach einem der Ansprüche 2 bis 4, mit einer Entkopplungsdiode (50, 51), die in der Leitung zum Steuereingang (33, 34) vorgesehen ist.

6. Vorrichtung nach einem der Ansprüche 2 bis 5, mit einer optischen und/oder akustischen Anzeige (56), die ein am Steuereingang (33, 34) liegendes Abschaltsignal für den Treiber (20) beziehungsweise den Motor (10) signalisiert.

## Claims

1. Device for positioning a part (12) by means of at least one actual-position-value transmitter (42) of an electric motor drive,
- the motor (10) of which can be switched on in one or the other direction of rotation in dependence on driver control signals,
- in which arrangement the driver control signals are generated by a control circuit (31) in dependence on a nominal position value
- and the control circuit (31) exhibits at least one control input (33, 34) for inhibiting the driver or for switching off the motor (10), characterised in that
- the control input (33, 34) is supplied, delayed in time, with a signal when the actual position value corresponds to a mechanical stop (14, 15) of the part (12) to be positioned
- and that the signal supplied to the control circuit (31) inhibits the driver (20) in such a manner that the direction of rotation of the motor (10) for adjusting the position in the direction of the stop (14, 15) reached is inhibited whilst the opposite direction of rotation is not inhibited.

2. Device according to Claim 1, comprising at least one comparator (43, 44) which compares the actual position value output by the actual-position-value transmitter (13) with at least one predeterminable threshold (46, 47) and which, when at least one threshold (46, 47) is exceeded, outputs a switching-off signal via a time delay (48, 49) to at least one control input (43, 44) of the control circuit (31), by means of which one or the other direction of rotation of the motor (10) is inhibited.

3. Device according to Claim 1 or 2, comprising an actual-position-value transmitter (13) constructed as potentiometer.

4. Device according to Claim 2, comprising a low-path RC filter (52, 53, 54, 55) as the time delay (48, 49).

5. Device according to one of Claims 2 to 4, comprising a decoupling diode (50, 51) which is provided in the line to the control input (33, 34).

6. Device according to one of Claims 2 to 5, comprising a visual and/or acoustical indication (56) which signals a switching-off signal for the driver (20) or the motor (10), respectively, and which is present at the control input (33, 34).

## Revendications

1. Dispositif pour positionner une pièce (12) au moyen d'au moins un indicateur (42) de valeur réelle de la position d'un entraînement par un moteur électrique,
- dont le moteur (10) est susceptible d'être connecté en fonction de signaux de commande dans l'un ou l'autre des sens de rotation,
- tandis que les signaux de commande sont émis par un circuit de commande (31) en fonction d'une valeur de consigne de la position,
- et le circuit de commande (31) comporte au moins une entrée de commande (33, 34) pour le blocage du circuit d'attaque ou bien pour éventuellement, la déconnexion du moteur (10),
caractérisé en ce que :
- un signal est appliqué à l'entrée de commande (33, 34) lorsque la valeur réelle de la position correspond à une butée mécanique (14, 15) de la pièce (12) à positionner,
- le signal appliqué au circuit de commande (31) bloque le circuit d'attaque (20) de façon que le sens de rotation du moteur (10) soit bloqué pour le déplacement de la position en direction de la butée ainsi atteinte (14, 15), tandis que le sens de rotation opposé n'est pas bloqué.

2. Dispositif selon la revendication 1, avec au moins un comparateur (43, 44), qui compare la valeur réelle de la position délivrée par un indicateur (13) de valeur réelle de la position avec au moins un seuil (46, 47) susceptible d'être prédéfini, et qui lors du dépassement d'au moins un seuil (46, 47) délivre un signal de déconnexion par l'intermédiaire d'une temporisation (48, 49) à au moins une entrée de commande (43, 44) du circuit de commande (31), signal grâce auquel l'un ou l'autre sens de rotation du moteur (10) est bloqué.

3. Dispositif selon la revendication 1 ou la revendication 2, avec un indicateur (13) de valeur réelle de la position réalisé sous la forme d'un potentiomètre.

4. Dispositif selon la revendication 2, avec un passe-bas RC (52, 53, 54, 55) pour la temporisation ( 48, 49).

5. Dispositif selon une des revendications 2 à 4, avec une diode de découplage (50, 51) qui est prévue sur la liaison vers l'entrée de commande (33, 34).

6. Dispositif selon une des revendications 2 à 5, avec une signalisation optique et/ou acoustique (56) qui indique qu'un signal de déconnexion pour le circuit d'attaque (20) ou éventuellement pour le moteur (10) est appliqué à l'entrée de commande (33, 34).
